# FASCICULE DE BREVET EUROPEEN

(11) **EP 1 260 799 B1**
(45) Date de publication et mention de la délivrance du brevet: **05.03.2008**
(21) Numéro de dépôt: 02354081.8
(22) Date de dépôt: 17.05.2002
(51) Int. Cl.: G01F 15/10

(54) **Dispositif de mise hors gel des compteurs d'eau par caloduc**
Abtauvorrichtung für Wasserzähler mit einem Wärmerohr
Defrosting device for water meters using a heat pipe

(30) Priorité: 23.05.2001 FR 0106786
(43) Date de publication de la demande: 27.11.2002
(73) Titulaire: ATHERM, 38420 Domene (FR)
(72) Inventeur: Teytu, André, 38420 DOMENE (FR)
(74) Mandataire: Hecké, Gérard

(56) Documents cités:
- EP-A- 0 484 193
- FR-A- 2 499 293
- FR-A- 2 606 052
- GB-A- 2 217 853

## Description

### Domaine technique de l'invention.

L'invention est relative à un dispositif de protection thermique à caloduc assurant le transfert de chaleur du sol pour le maintien hors-gel d'un compteur d'eau, lequel est raccordé entre une canalisation d'arrivée d'eau en liaison avec le réseau collectif souterrain de distribution d'eau, et une canalisation d'utilisation de l'installation sanitaire.

### Etat de la technique

La mise hors-gel des compteurs d'eau fait usage actuellement de dispositifs passifs destinés à éviter les déperditions calorifiques. Des coffrets de protection en matière isolante sont agencés autour des compteurs d'eau et des canalisations d'arrivée et de départ pour limiter les pertes thermiques vers l'extérieur en retardant l'effet du gel. L'efficacité de ces dispositifs de protection connus est néanmoins limitée, car le temps de maintien hors-gel dépend de la valeur de la température extérieure dans le lieu où se trouve le compteur. Il peut ainsi varier de quelques jours à quelques dizaines de jours si la température reste figée à une température en-dessous de -15°C.

On a également proposé des dispositifs actifs consistant à apporter de l'énergie calorifique au compteur d'eau à l'aide d'une source de chaleur extérieure, notamment un cordon chauffant électrique, ou une circulation de fluide chaud. Ces dispositifs nécessitent la mise en place d'une ligne jusqu'au compteur en prévoyant une régulation pour limiter la consommation d'énergie lorsque le seuil de protection est atteint.

Parmi les dispositifs actifs, on a pensé à utiliser la chaleur présente dans le sol à une profondeur suffisante pour qu'elle soit toujours supérieure à 0°C. Des solutions par caloducs pour le transfert de la chaleur du sol au compteur ont ainsi été proposées, par exemple dans les documents EP 484193 et GB 2217853. Un caloduc est généralement implanté dans le sol sur une longueur et à une profondeur suffisante permettant de maintenir une platine à une température supérieure à 0°C. Le compteur est fixé sur cette platine pour le maintien hors gel. Cette solution à l'inconvénient de nécessiter un caloduc de grande longueur et de grande surface pour le captage des calories emmagasinées dans le sol. Le contact thermique du caloduc avec le sol est néanmoins aléatoire, et l'installation d'un tel dispositif nécessite des travaux de génie civil coûteux. Le caloduc doit d'une part résister à la corrosion dans des sols de nature variable, et d'autre part être robuste pour se comporter comme un élément structurel de génie civil.

### Objet de l'invention

L'objet de l'invention consiste à palier à ces inconvénients, et à réaliser un dispositif de mise hors gel des compteurs d'eau par caloduc, facile à installer, dépourvu de source d'énergie extérieure, ne nécessitant aucune protection isolante extérieure, et dans lequel le caloduc est entièrement protégé sans contrainte mécanique et indépendamment de l'environnement.

Le dispositif selon l'invention est caractérisé en ce qu'il comporte un tube caloduc agencé à l'intérieur de la canalisation d'arrivée enterrée sur une longueur prédéterminée, ledit tube caloduc étant scellé à ses deux extrémités après remplissage d'un liquide caloporteur, et se trouvant en bon contact thermique avec une pièce de raccordement métallique reliée au compteur.

Selon une caractéristique de l'invention, le tube caloduc est en matériau métallique déformable pour suivre la courbure de la canalisation d'arrivée d'eau.

Selon une caractéristique de l'invention, le tube caloduc et la pièce de raccordement sont réalisés dans une matière métallique entièrement compatible avec l'eau circulant dans la canalisation d'arrivée. Le liquide caloporteur dans le tube caloporteur peut être à base d'alcool éthylique, ou de tout autre liquide caloporteur alimentaire.

Selon un mode de réalisation préférentiel, une partie du tube caloduc est enroulée en spirale et enfilée à l'intérieur de l'alésage axial de la pièce de raccordement par tout procédé d'assemblage permettant d'obtenir un contact thermique permanent.

Selon une variante, la pièce de raccordement comporte un manchon doté d'un trou central de réception du trou caloduc, et de plusieurs trous périphériques de passage de l'eau.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue schématique du compteur d'eau installé dans un regard et équipé du dispositif de protection thermique à caloduc selon l'invention ;
- la figure 2 représente une vue éclatée des pièces d'installation du caloduc au compteur ;
- les figures 3 et 4 illustrent deux variantes de réalisation de la pièce de raccordement avec le tube caloduc ;
- la figure 5 est une vue en coupe selon la ligne 5-5 de la figure 4 ;
- la figure 6 montre une vue schématique d'un caloduc dont le fonctionnement connu est utilisé dans les réalisations des figures précitées.

### Description d'un mode de réalisation préférentiel.

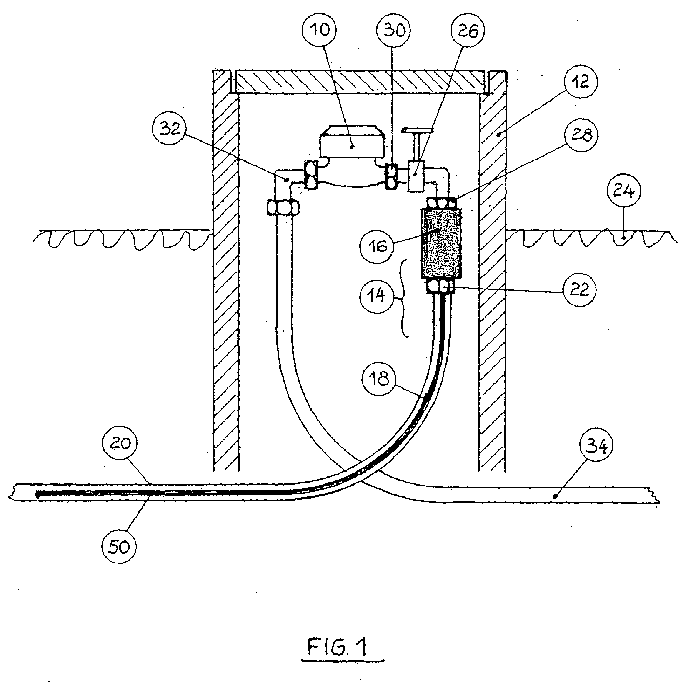

En référence à la figure 1, le compteur d'eau 10 est installé dans un regard 12 en étant équipé d'un dispositif de protection thermique à caloduc désigné par le repère général 14. Le dispositif de protection thermique à caloduc 14 est composé d'une pièce de raccordement 16 métallique en contact thermique avec un tube caloduc 18, lequel se prolonge à l'intérieur de la canalisation d'arrivée 20 d'eau.

Le tube caloduc 18 métallique, par exemple en cuivre, présente une longueur suffisante pour constituer la partie évaporateur se situant dans la zone hors gel de la canalisation d'arrivée 20 d'eau en liaison avec le réseau collectif de distribution d'eau.

La canalisation d'arrivée 20 d'eau est généralement réalisée en polyéthylène ou autre matière plastique de grande résistance mécanique, et est raccordée à la pièce de raccordement 16 par un premier écrou de fixation 22. Selon les régions géographiques et le climat, le tube caloduc 18 est situé avec la canalisation 20 dans le regard 12 à une profondeur comprise entre 40cm et 120cm par rapport au niveau du sol 24.

L'autre extrémité de caloduc sert de condenseur agencé dans la pièce de raccordement 16, laquelle est raccordée à un robinet d'arrêt 26 par un deuxième écrou de fixation 28. Le robinet d'arrêt 26 est connecté à l'entrée du compteur d'eau 10 par un troisième écrou de fixation 30.

La sortie du compteur d'eau 10 est branchée par un raccord 32 coudé à la canalisation d'utilisation 34 pour l'alimentation de l'installation sanitaire de l'habitation. On remarque que le compteur d'eau 10 et son robinet d'arrêt 26 peuvent être positionnés au-dessus du niveau du sol 24 grâce à la présence du tube caloduc 18.

Le tube caloduc 18 présente un diamètre de l'ordre d'une dizaine de mm, et une longueur de 2 à 4 mètres à l'intérieur de la canalisation d'arrivée 20 d'eau.

Le tube caloduc 18 est scellé à ses deux extrémités, et renferme une petite quantité de liquide caloporteur en présence de sa propre vapeur, à l'exclusion de tout gaz incondensable. Le liquide peut être de l'alcool éthylique ou tout autre liquide caloporteur conforme aux normes en vigueur.

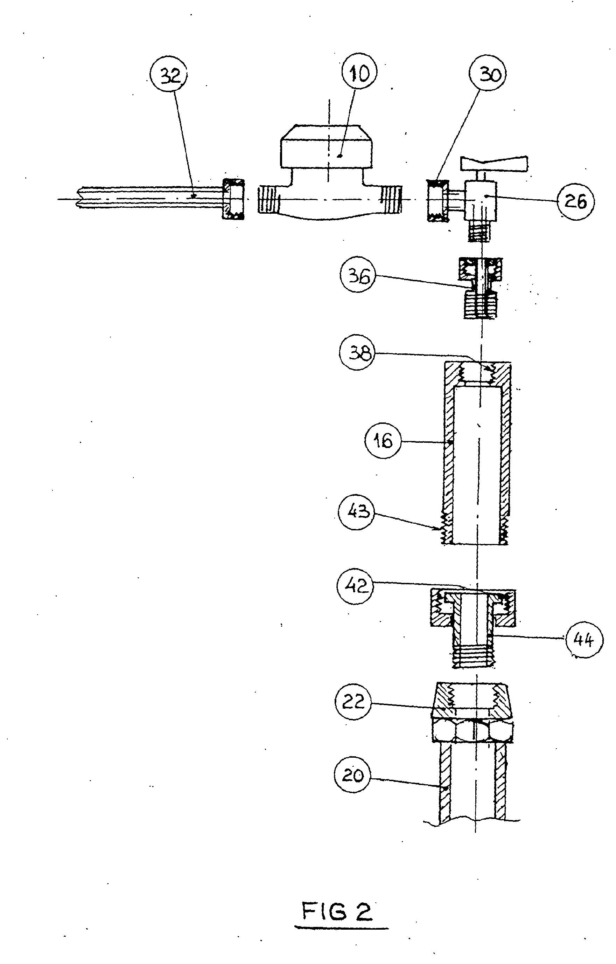

Sur la figure 2, le deuxième écrou de fixation 28 est remplacé par un raccord trois pièces 36 vissé dans un orifice taraudé 38 à la partie supérieure de la pièce de raccordement 16 tubulaire du caloduc. Un autre raccord 40 est agencé à la partie inférieure, et comporte un écrou 42 tournant coopérant avec la partie filetée 43 de la pièce de raccordement 16, et vissé par une vis 44 sur la canalisation d'eau 20 par le deuxième écrou 22. Un tel assemblage du caloduc 14 au compteur 10 nécessite uniquement le serrage d'écrous sans avoir à faire tourner d'autres pièces.

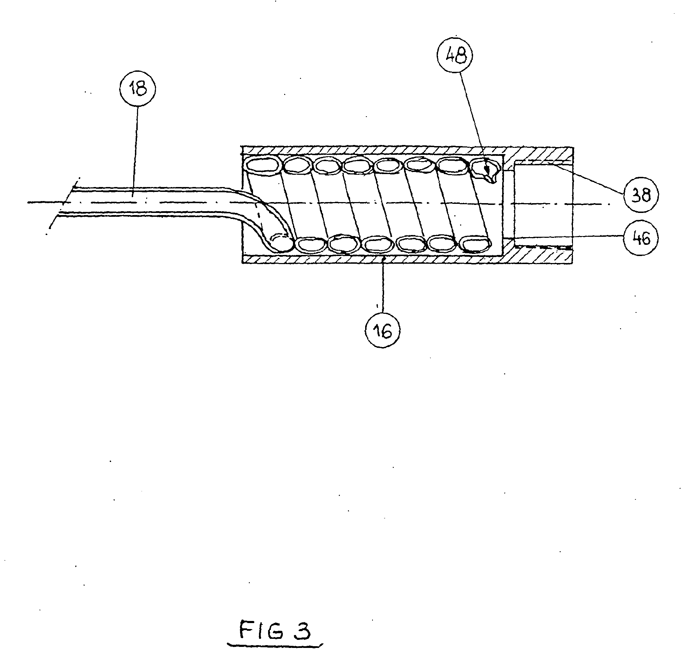

Sur la figure 3, une partie du tube caloduc 18 est enroulée en spirale et enfilée dans l'alésage interne de la pièce de raccordement 16 en étant séparé de l'orifice taraudé 38 par une collerette 46 annulaire. La liaison thermique entre cette partie interne du tube caloduc 18 et la pièce de raccordement 16 s'effectue par tout procédé d'assemblage, notamment par brasage ou d'emmanchement. On voit que l'extrémité supérieure du tube caloduc 18 est scellée au point 48. L'autre extrémité inférieure 50 (voir figure 1) est également scellée. L'eau de la canalisation 20 circule dans la pièce de raccordement 16, et est en contact permanent avec l'enveloppe du serpentin du tube caloduc 18.

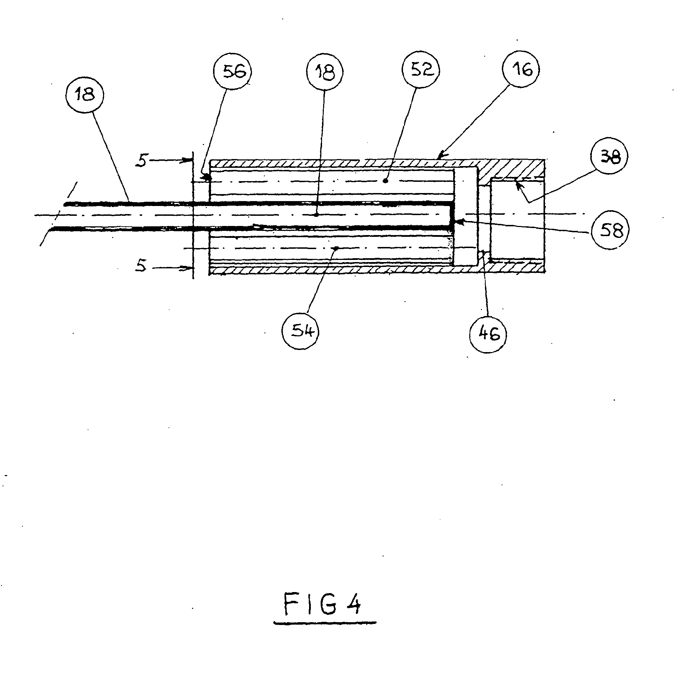

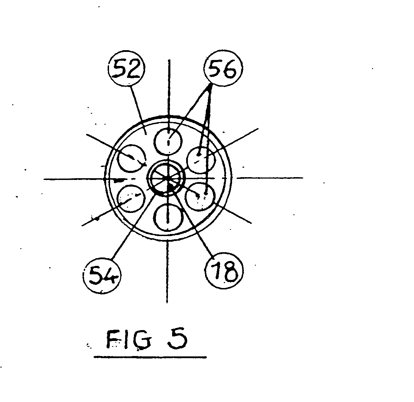

Sur les figures 4 et 5, la pièce de raccordement 16 comporte à l'opposé de l'orifice taraudé 38, un manchon 52 cylindrique ayant un trou 54 central de réception du tube caloduc 18, et des trous 56 périphériques de passage de l'eau en provenance de la canalisation 20. A l'intérieur du manchon 52, le tube caloduc 18 est droit, et la liaison thermique du caloduc 18 dans l'orifice 54 peut être réalisée soit par emmanchment dur, soit par brasage, soit par collage ou tout autre moyen assurant un bon contact thermique. On voit que l'extrémité supérieure 58 de la partie droite du tube caloduc 18 est scellée.

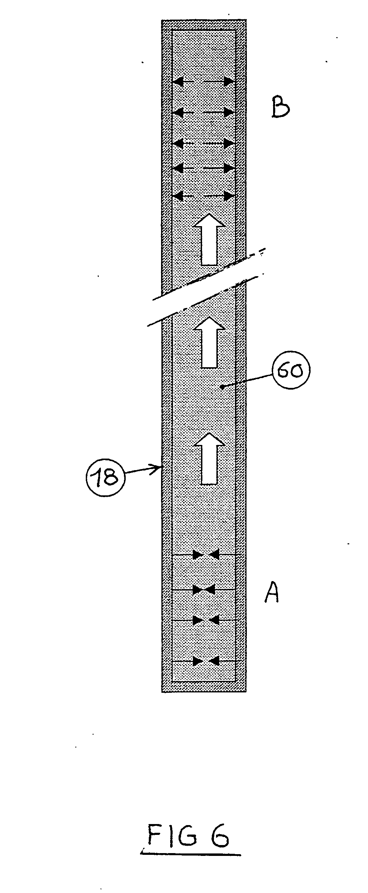

Le fonctionnement connu du caloduc dans les réalisations précédemment décrites, est illustré schématiquement sur la figure 6.

Le liquide caloporteur 60 à changement de phase liquide-vapeur se trouve par effet de gravité dans la partie inférieure A du tube caloduc 18, c'est à dire dans la zone du terrain la plus basse qui est en permanence hors gel. La partie supérieure B du tube caloduc 18 est remplie de vapeur à une pression correspondant à la tension de saturation du liquide caloporteur qui est à la partie inférieure A.

Lorsque la température du compteur d'eau 10 descend en-dessous de la température du sol profond, la vapeur dans la zone supérieure B se trouve à une pression supérieure à la température de saturation, provoquant une condensation avec une libération de la chaleur latente de vaporisation. Au niveau du liquide, la pression de vapeur saturante va également être abaissée, entraînant un effet de vaporisation de ce liquide avec absorption de la chaleur latente de vaporisation. Le condensat produit va descendre par gravité vers la partie inférieure A du tube caloduc 18 en réalimentant le phénomène de thermosiphon avec le changement de phase.

Aucune source d'énergie extérieure n'est nécessaire pour cette égalisation de température entre la source chaude (l'eau dans la canalisation 20 enterrée), et la source froide (le compteur d'eau 10 dans le regard 12). Les calories sont transmises par la caloduc au robinet d'arrêt 26 et au compteur 10 par conduction métallique à travers la pièce de raccordement 16. Le caloduc possède une fonction intrinsèque de diode thermique, étant donné que l'apport de calories est automatiquement stoppé dès que la température du compteur 10 dans la zone B sera supérieure à celle du sol profond. Le caloduc sera donc inopérant pendant la période estivale.

Le montage du dispositif de protection thermique à caloduc 14 est aisé, et peut être réalisé entièrement par le personnel qui met en place le compteur d'eau 10. Il suffit d'enfiler le tube caloduc 18 sur une longueur de 2 à 4 mètres à l'intérieur de la canalisation d'arrivée 20 d'eau, et de serrer les raccords 36, 40 ou écrous 28, 30 correspondants pour obtenir une liaison étanche autorisant le transfert thermique entre la caloduc et le compteur 10.

Le dispositif de protection thermique à caloduc 14 présente les avantages suivants :
- montage simple, sans modifications des méthodes d'installation existantes ;
- le tube caloduc 18 est entièrement protégé dans la canalisation d'arrivée 20 d'eau en polyéthylène, et ne subit aucune contrainte mécanique ;
- le tube caloduc 18 est déformable de manière à suivre la courbure de la canalisation d'arrivée 20 ( rayon de courbure minimum de 500mm) ;
- le tube caloduc 18 et la pièce de raccordement 16 sont réalisés dans une matière métallique entièrement compatible avec l'eau ;
- le tube caloduc 18 contient un liquide caloporteur alimentaire dont l'ingestion accidentelle en cas de rupture ne présente aucun risque pour la santé.

## Revendications

1. Dispositif de protection thermique à caloduc (14) assurant le transfert de chaleur du sol pour le maintien hors-gel d'un compteur d'eau (10), lequel est raccordé entre une canalisation d'arrivée (20) d'eau en liaison avec le réseau collectif souterrain de distribution d'eau, et une canalisation d'utilisation (34) de l'installation sanitaire, **caractérisé en ce qu**'il comporte un tube caloduc (18) agencé à l'intérieur de la canalisation d'arrivée (20) enterrée sur une longueur prédéterminée, ledit tube caloduc étant scellé à ses deux extrémités après remplissage d'un liquide caloporteur, et se trouvant en bon contact thermique avec une pièce de raccordement (16) métallique reliée au compteur (10).

2. Dispositif de protection thermique à caloduc selon la revendication 1, **caractérisé en ce que** le tube caloduc (18) est en matériau métallique déformable pour suivre la courbure de la canalisation d'arrivée (20) d'eau.

3. Dispositif de protection thermique à caloduc selon la revendication 1, **caractérisé en ce que** le tube caloduc (18) et la pièce de raccordement (16) sont réalisés dans une matière métallique entièrement compatible avec l'eau circulant dans la canalisation d'arrivée (20).

4. Dispositif de protection thermique à caloduc selon l'une des revendications 1 à 3, **caractérisé en ce que** le liquide caloporteur dans le tube caloporteur (18) est à base d'alcool éthylique.

5. Dispositif de protection thermique à caloduc selon la revendication 1, **caractérisé en ce qu**'une partie du tube caloduc (18) est enroulée en spirale et enfilée à l'intérieur de l'alésage axial de la pièce de raccordement (16) par tout procédé d'assemblage permettant d'obtenir un contact thermique permanent.

6. Dispositif de protection thermique à caloduc selon la revendication 1, **caractérisé en ce que** la pièce de raccordement (16) compote un manchon (52) doté d'un trou (54) central de réception du trou caloduc (18), et de plusieurs trous (56) périphériques de passage de l'eau.

7. Dispositif de protection thermique à caloduc selon l'une des revendications 1 à 6, **caractérisé en ce que** la pièce de raccordement (16) et le tube caloduc (18) sont raccordés au compteur (10) par une série de raccords (36, 40) ou d'écrous de fixation (22, 28) pour obtenir une liaison étanche autorisant le transfert thermique entre le caloduc (14) et le compteur (10).

8. Dispositif de protection thermique à caloduc selon l'une des revendications 1 à 7, **caractérisé en ce que** le tube caloduc (18) présente un diamètre de l'ordre d'une dizaine de millimètres, et une longueur de 2 à 4 mètres à l'intérieur de la canalisation d'arrivée (20).

## Claims

1. A thermal protection device with a heat pipe system (14) performing heat transfer from the ground to keep a water meter (10) above freezing point, which water meter is connected between a water inlet pipe (20), connected to the collective underground water distribution system, and a sanitary water installation user pipe (34), **characterized in that** it comprises a heat pipe (18) arranged inside the water inlet pipe (20) buried over a predetermined length, said heat pipe being sealed at both ends after being filled with a heat conveying liquid and being in good thermal contact with a metal connecting part (16) connected to the meter (10).

2. The thermal protection device with heat pipe system according to claim 1, **characterized in that** the heat pipe (18) is made of deformable metallic material to follow the curvature of the water inlet pipe (20).

3. The thermal protection device with heat pipe system according to claim 1, **characterized in that** the heat pipe (18) and connecting part (16) are made from a metallic material that is fully compatible with the water flowing in the inlet pipe (20).

4. The thermal protection device with heat pipe system according to one of claims 1 to 3, **characterized in that** the heat conveying liquid in the heat pipe (18) is ethyl alcohol-based.

5. The thermal protection device with heat pipe system according to claim 1, **characterized in that** a part of the heat pipe (18) is wound in a spiral and threaded into the axial bore of the connecting part (16) by any assembly method enabling a permanent thermal contact to be obtained.

6. The thermal protection device with heat pipe system according to claim 1, **characterized in that** the connecting part (16) comprises a sleeve (52) provided with a central hole (54) accommodating the heat pipe (18), and with several peripheral holes (56) for the water to flow.

7. The thermal protection device with heat pipe system according to one of claims 1 to 6, **characterized in that** the connecting part (16) and heat pipe (18) are connected to the meter (10) by a series of connections (36, 40) or fixing nuts (22, 28) to obtain a tight connection enabling heat transfer to take place between the heat pipe system (14) and meter (10).

8. The thermal protection device with heat pipe system according to one of claims 1 to 7, **characterized in that** the heat pipe (18) presents a diameter of about ten millimeters and a length of 2 to 4 meters inside the inlet pipe (20).

## Patentansprüche

1. Wärmeschutzvorrichtung mit einem Wärmeleitrohr (14), das für die Übertragung der Bodenwärme als Gefrierschutz für einen Wasserzähler (10) sorgt, die zwischen einer Wasserzuführleitung (20), die an das kollektive unterirdische Wasserversorgungsnetz angeschlossen ist, und einer Nutzungsleitung (34) der Sanitäranlage angeordnet ist, **dadurch gekennzeichnet, dass** sie ein Wärmeleitrohr (18) umfasst, das in der Zuführleitung (20) angeordnet ist, die auf einer bestimmten Länge in der Erde verlegt ist, wobei das Wärmeleitrohr nach Befüllung mit einer Wärme leitenden Flüssigkeit an seinen beiden Enden verschlossen wird und sich in gutem Wärmekontakt mit einem metallenen Anschlusselement (16) befindet, das mit dem Zähler (10) verbunden ist.

2. Wärmeschutzvorrichtung mit Wärmeleitrohr nach Anspruch 1, **dadurch gekennzeichnet, dass** das Wärmeleitrohr (18) aus verformbarem metallenen Material besteht, um sich der Krümmung der Wasserzuführleitung (20) anpassen zu können.

3. Wärmeschutzvorrichtung mit Wärmeleitrohr nach Anspruch 1, **dadurch gekennzeichnet, dass** das Wärmeleitrohr (18) und das Anschlusselement (16) aus einem metallenen Material gefertigt sind, das kompatibel ist mit dem in der Zuführleitung (20) fließenden Wasser.

4. Wärmeschutzvorrichtung mit Wärmeleitrohr nach einem der Ansprüche 1 bis 3, **dadurch gekennzeichnet, dass** die Wärme leitende Flüssigkeit in dem Wärmeleitrohr (18) eine solche auf Basis von Ethylalkohol ist.

5. Wärmeschutzvorrichtung mit Wärmeleitrohr nach Anspruch 1, **dadurch gekennzeichnet, dass** ein Teil des Wärmeleitrohrs (18) spiralförmig gewickelt und in die axiale Bohrung des Anschlusselements (16) mittels eines beliebigen Verbindungsverfahrens eingeschoben ist, das einen permanenten Wärmekontakt ermöglicht.

6. Wärmeschutzvorrichtung mit Wärmeleitrohr nach Anspruch 1, **dadurch gekennzeichnet, dass** das Anschlusselement (16) eine Hülse (52) umfasst, die mit einer zentralen Öffnung (54) zur Aufnahme des Wärmeleitrohrs (18) und mehreren Öffnungen (56) am Umfang für den Durchtritt des Wassers versehen ist.

7. Wärmeschutzvorrichtung mit Wärmeleitrohr nach einem der Ansprüche 1 bis 6, **dadurch gekennzeichnet, dass** das Anschlusselement (16) und das Wärmeleitrohr (18) mit dem Zähler (10) über eine Reihe von Verbindungsstücken (36, 40) oder Befestigungsmuttern (22, 28) verbunden sind, damit man eine dichte Verbindung erhält, die die Wärmeübertragung zwischen dem Wärmeleitrohr (14) und dem Zähler (10) erlaubt.

8. Wärmeschutzvorrichtung mit Wärmeleitrohr nach einem der Ansprüche 1 bis 7, **dadurch gekennzeichnet, dass** das Wärmeleitrohr (18) einen Durchmesser in der Größenordnung einiger zehn Millimeter und eine Länge von 2 bis 4 Metern innerhalb der Zuführleitung (20) hat.
